Europäisches Patentamt

(19) European Patent Office

Office européen des brevets

(11) Veröffentlichungsnummer: **0 017 787 B1**

## (12) EUROPÄISCHE PATENTSCHRIFT

(45) Veröffentlichungstag der Patentschrift:
**12.10.83**

(21) Anmeldenummer: **80101488.7**

(22) Anmeldetag: **21.03.80**

(51) Int. Cl.³: **F 16 J 3/06,** F 15 B 15/10

(54) Abdichtung für eine Kolben-Zylinder-Anordnung.

(30) Priorität: **18.04.79 CH 3633/79**

(43) Veröffentlichungstag der Anmeldung:
**29.10.80 Patentblatt 80/22**

(45) Bekanntmachung des Hinweises auf die Patenterteilung:
**12.10.83 Patentblatt 83/41**

(84) Benannte Vertragsstaaten:
**AT BE CH DE FR GB IT LU NL SE**

(56) Entgegenhaltungen:
**DE-A-2 554 733**
**FR-A-975 545**
**FR-A-1 510 437**
**FR-A-1 579 731**
**US-A-2 027 979**

(73) Patentinhaber: **Hydrowatt Systems Limited, Kingsgate House 115 High Holborn, London WC1V 6JE (GB)**

(72) Erfinder: **Frey, Bernhard, Freistrasse 2, CH-8200 Schaffhausen (CH)**

(74) Vertreter: **Frey, Conrad, Dr. jur., Rechtsanwalt Utoquai 39, CH-8008 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Abdichtung für eine Kolben-Zylinder-Anordnung

Die Erfindung bezieht sich auf eine Abdichtung für eine Kolben-Zylinder-Anordnung mit zwei relativ zueinander bewegbaren Arbeitsgliedern und mit einem Dichtungsschlauch, der einen Arbeitsraum begrenzt und mindestens mit einem ersten der beiden Arbeitsglieder formschlüssig oder stoffschlüssig verbunden ist und sich unter dem Druck im Arbeitsraum gegen eine durch das zweite der beiden Arbeitsglieder gebildete Stützfläche abstützt, wobei im Anschlussbereich des Dichtungsschlauches an das erste Arbeitsglied mindestens ein den Dichtungsschlauch umgreifendes Zwischenelement angeordnet ist.

Kolben-Zylinder-Anordnungen der vorgenannten Art finden insbesondere als Pumpen und Motoren für unter hohem Druck stehende Arbeitsflüssigkeiten Verwendung. Der mit beiden Arbeitsgliedern, d.h. Kolben und Zylinder, verbundene Dichtungsschlauch nimmt durch elastische Stauchung bzw. Dehnung in seiner Längsrichtung an der periodischen Veränderung des Arbeitsraumes teil und bewirkt eine hermetische Abdichtung, die bei hohen Drücken auf andere Weise nur schwer zu erzielen ist. Auch beim Fördern von aggressiven oder giftigen Flüssigkeiten ist die hiermit erzielbare, hermetische Abdichtung von Bedeutung.

Eine Kolben-Zylinder-Anordnung der eingangs genannten Art ist bekannt aus der FR-A-1 579 731. Dort ist ein Dichtungsschlauch für einen Bremszylinder durch einen steifen Haltering auf einem Anschlussabschnitt eines Bremskolbens festgeklemmt, während sich die Aussenfläche des Dichtungsschlauches unter dem von innen einwirkenden Arbeitsdruck unmittelbar gegen die als Stützfläche wirkende Zylinderbohrung abstützt. Dadurch ergibt sich das Problem einer unter hohem Anpressdruck ablaufenden Gleitbewegung zwischen der Aussenfläche des Dichtungsschlauches und der Stützfläche. Besonders im Anschlussbereich des Dichtungsschlauches an das gegenüber der Stützfläche bewegte Arbeitsglied ergibt sich eine hohe Beanspruchung des Schlauchmaterials, weil die Gleitgeschwindigkeit der Schlauchoberfläche hier dem vollen Wert der Relativgeschwindigkeit des betreffenden Arbeitsgliedes gegenüber der Stützfläche entspricht. (In Richtung zur entgegengesetzten Anschlussstelle an das die Stützfläche bildende Arbeitsglied nimmt diese Gleitgeschwindigkeit mit dem Verformungsgrad des Schlauches bis auf Null ab.)

Zur Abhilfe ist es bekannt (s. DE-OS 2 554 733), eine Schmierflüssigkeit in den Spaltraum zwischen Dichtungsschlauch und Stützfläche einzuführen, die aus diesem Spaltraum im Anschlussbereich zwischen Schlauch und erstem Arbeitsglied gedrosselt abströmt. Hier ergeben sich kritische Verformungs- und Gleitverhältnisse, weil das weichelastische Material des Dichtungsschlauches unter der Wirkung des Arbeitsdruckes noch stark gegen die Stützfläche gepresst wird, während anderseits der Schmiermitteldruck in der Nähe der Abströmöffnung des Spaltraumes bereits abfällt. Es kann sich daher im Übergangsbereich unter Umständen eine unmittelbare Berührung zwischen Dichtungsmaterial und Stützfläche mit entsprechender Mischreibung und Verschleiss der Schlauchoberfläche ergeben, vor allem in Verbindung mit der durch Hochdruckreibung verursachten Erwärmung des Dichtungsmaterials. Anderseits kann die Auswärtsverformung des Dichtungsmaterials im Abströmbereich aus dem Spaltraum nicht beliebig unterdrückt werden, weil hier gegebenenfalls eine Drosselwirkung gegenüber der abströmenden Schmierflüssigkeit durch Verengung des Spaltraumes angestrebt wird. Eine solche, unter der Verformungswirkung des Arbeitsdruckes selbsteinstellende Drossel bietet den Vorteil einer sicheren Druckhaltung und Abstandhaltung zwischen Schlauchoberfläche und Stützfläche im zurückliegenden Hauptbereich der Schlauchoberfläche. Die Auswärtsverformung des Schlauchmaterials führt aber wiederum zur Berührungsgefahr mit der Stützfläche mit ihren erwähnten schädlichen Auswirkungen.

Aufgabe der Erfindung ist die Schaffung einer Abdichtung für Kolben-Zylinder-Anordnungen mit Dichtungsschlauch, die sich durch geringe Verschleiss- und Beschädigungsanfälligkeit des Dichtungsschlauches im Bereich der maximalen Gleitgeschwindigkeit gegenüber der Stützfläche auszeichnet. Die erfindungsgemässe Lösung dieser Aufgabe kennzeichnet sich bei einer Abdichtung der eingangs genannten Art durch die im Patentanspruch 1 angegebenen Merkmale.

Die Anordnung eines den Dichtungsschlauch in seinem Anschlussbereich umgreifenden, gleitfreundlichen und verschleissfesten Zwischenelementes bietet in Verbindung mit der Schmiermitteleinführung die Möglichkeit, diesen exponierten Abschnitt des Schlauchmaterials gegen Berührung mit der Stützfläche und damit gegen Beschädigung abzuschirmen. In Weiterbildung der Erfindung kann ein solches Zwischenelement eine radial einwärts gerichtete Rückhaltewirkung auf das Schlauchmaterial im Anschlussbereich ausüben und damit entgegen der radial auswärts gerichteten Komponente des Arbeitsdruckes das Aufwölben des Schlauchmaterials und dessen mögliche Berührung mit der Stützfläche verhindern. Dazu wird das vorzugsweise ringförmige Zwischenelement zweckmässig mit radial einwärts gerichteter Druckvorspannung auf dem Anschlussbereich des Dichtungsschlauches montiert. Wenn trotzdem eine Gleitberührung an der Stützfläche auftritt, so übernimmt das Zwischenelement wiederum seine Schutzfunktion bezüglich des Schlauchmaterials. Als weitere Funktion kann ein solches Zwischenelement mit gezielt zugelassener, radialer Aufweitung unter der Wirkung des auf seine Innenseite wirkenden Arbeitsdruckes die Bildung einer selbsteinstellenden Drossel für ein aus dem Spaltraum zwischen Schlauch und

Stützfläche abströmendes Schmiermittel übernehmen. Hierzu wird der dem Arbeitsraum zuge-wandte Abschnitt des Zwischenelementes zweck-mässig vergleichsweise dünnwandig in Form einer Hülse oder einer spitzauslaufenden Manschette ausgebildet, die mit ihrem dem Arbeits-raum zugewandten Randbereich radial aufge-weitet wird und hier einen ringförmigen Drosselspalt bildet. Die Übertragung des Arbeitsdruckes auf die Innenfläche des Zwischenelementes kann durch das elastische Material des Dichtungs-schlauch-Anschlussbereiches herbeigeführt wer-den, welches den Innenraum des Zwischenelementes ganz oder teilweise ausfüllt. Wie gesagt, können in der Praxis durch entsprechende Gestaltung und Bemessung des Zwischenelementes, insbesondere seines ringförmigen oder mantelartigen Teiles, der sich längs des Umfanges der Stützfläche erstreckt, Kombinationen der ver-schiedenen erwähnten Funktionen gezielt einge-stellt werden.

Weitere Merkmale und Vorteile der Erfindung werden anhand der in den Zeichnungen schema-tisch dargestellten Ausführungsbeispiele er-läutert. Hierin zeigt:

Fig. 1 einen Axialschnitt einer Kolben-Zylinder-Anordnung mit Dichtungsschlauch als Anwendungsbeispiel für den Einsatz eines ringförmigen Zwischenelementes,

Fig. 2 in grösserem Massstab einen Teil-Axial-schnitt des Dichtungsschlauch-Anschlussberei-ches an einem als Kolben ausgebildeten Arbeits-glied mit eingesetztem, ringförmigem Zwischen-element,

Fig. 2a eine abgewandelte Querschnittsform ei-nes ringförmigen Zwischenelementes mit Zusatz-feder,

Fig. 2b eine weitere Querschnittsausführung eines ringförmigen Zwischenelementes, ebenfalls mit Zusatz-Ringfeder, und

Fig. 3 einen Teil-Axialschnitt ähnlich Fig. 2 mit einem büchsenförmigen Zwischenelement im Dichtungsschlauch-Anschlussbereich.

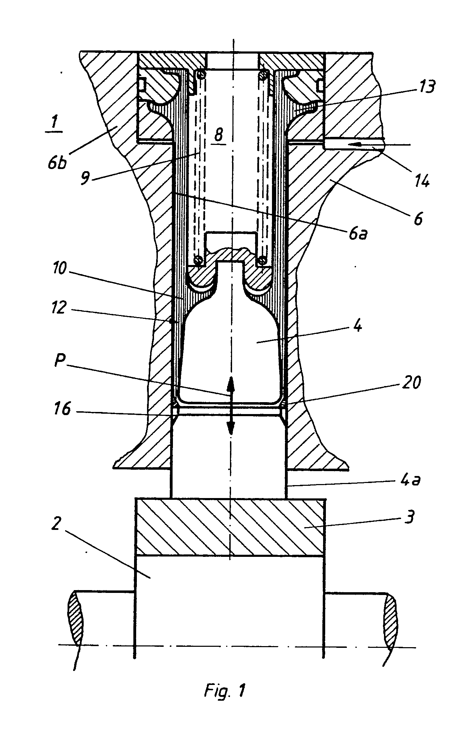

Nach Fig. 1 wird die beispielsweise als Pumpe wirkende Kolben-Zylinder-Anordnung 1 von einem Exzenter 2 über einen nichtrotierenden Lagerring 3 im Sinne des Pfeiles P angetrieben. Ein erstes, hier als Kolben ausgebildetes Arbeitsglied 4 stützt sich nach unten mit einem Führungs- und Stösselabschnitt 4a am Lagerring 3 ab und vollführt somit eine oszillierende Arbeitsbewegung gemäss Pfeil P. Ein zweites, als Zylinder ausgebildetes Arbeitsglied 6 umschliesst einen Arbeitsraum 8, innerhalb dessen eine das Kolben-Arbeitsglied 4 in Anlage am Lagerring 3 haltende Schrauben-Druckfeder 9 untergebracht ist. Innerhalb des Zylinder-Arbeitsgliedes 6 ist ein Dichtungsschlauch 10 angeordnet, der sich mit seiner Aussenfläche an der zylindrischen Stützfläche 6a des Arbeitsgliedes 6 unter der Wirkung des Drukkes im Arbeitsraum 8 radial abstützt. Das untere Ende des Dichtungsschlauches 10 ist durch einen Anschlussbereich 12 stoffschlüssig, vorzugsweise durch Vulkanisation, mit dem Kolben-Arbeitsglied 4 verbunden und unterliegt somit einer axialen Dehnung und Stauchung gemäss der Arbeitsbewegung entsprechend Pfeil P. Am oberen Ende ist der Dichtungsschlauch 10 durch einen Anschlussbereich 13 mit einer Klemm- oder Stoffschlussverbindung fest mit dem Kopfabschnitt 6b des Zylinder-Arbeitsgliedes 6 verbunden. Der Arbeitsraum 8 wird somit allseitig hermetisch durch den Dichtungsschlauch 10 abgedichtet, welch letzterer an der periodischen Veränderung des Arbeitsraumes durch seine Axialverformung teilnimmt. In den Spaltraum zwischen der Aussenfläche des Dichtungsschlauches 10 und der Stützfläche 6a wird in nicht näher dargestellter Weise über einen Anschluss 14 eine Schmierflüssigkeit eingepresst, welche diesen Spaltraum in Axialrichtung nach unten durchströmt und am unteren Ende des Dichtungsschlauch-Anschlussbereiches 12 über eine Drosselstelle in einen Niederdruckraum, beispielsweise einen mit Abflusskanälen (nicht dargestellt) versehenen Ringraum 16, abströmt. Infolge dieser Abströmdrosselung kann sich im Spalt-raum zwischen Dichtungsschlauch und Stützflä-che ein mit dem Druck im Arbeitsraum im Gleichgewicht stehender Schmiermitteldruck ausbilden, der eine Berührung und Mischreibung zwischen Schlauch und Stützfläche ausschliesst. Dazu ist eine entsprechende Bemessung und Elastizitäts-einstellung der Drosselstelle im Anschlussbe-reich 12 erforderlich, was durch Einfügung eines beispielsweise mit radialer Vorspannung auf dem Schlauchmaterial sitzenden, ringförmigen Zwischenelements 20 erreicht wird.

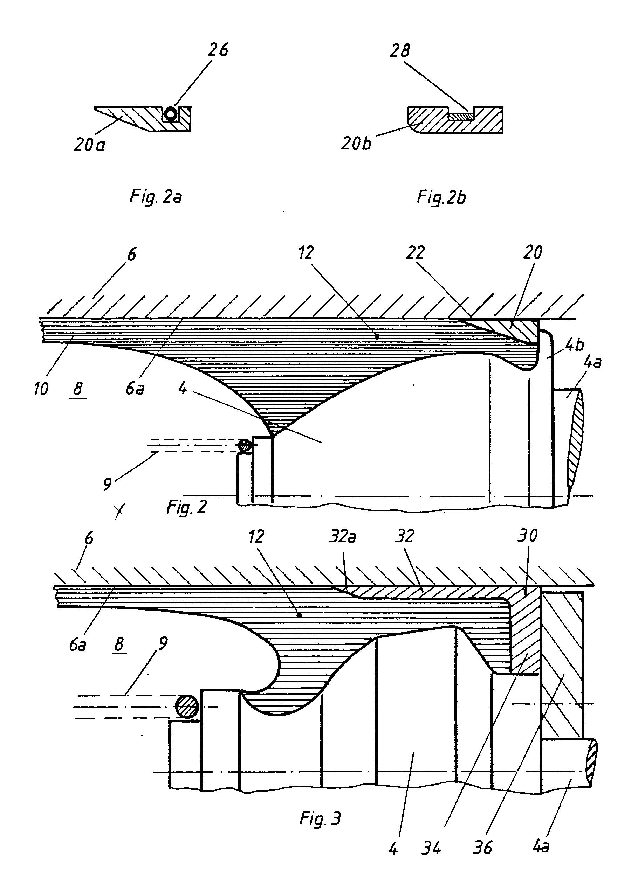

Ausbildung und Anordnung des ringförmigen Zwischenelementes 20 sind im einzelnen aus Fig. 2 ersichtlich. Danach ist der Querschnitt dieses Zwischenelementes dreieckartig mit parallel zur Mantellinienrichtung der Stützfläche 6a angeordneter Aussenseite und in Richtung vom Ar-beitsraum 8 scharfkantig auslaufendem Endab-schnitt ausgebildet. An der entgegengesetzten Seite weist das Zwischenelement eine radial verlaufende Querschnittseite auf, die sich an einem Axialanschlag 4b des Kolben-Arbeitsgliedes 4 gegen die Axialkomponente des im Arbeitsraum 8 herrschenden Druckes abstützt. Dieser Druck wird durch das elastische Material des Dichtungsschlauch-Anschlussbereiches 12 auf die Innenseite des Zwischenelementes 20 übertragen. Damit ergibt sich auch eine radial aufweitende Komponente des auf diesen Ringkörper wirkenden Druckes, was bei entsprechend elastischer Verformbarkeit zu einer direkten Teilnahme der Aus-senfläche und insbesondere des arbeitsraumseiti-gen Kantenabschnitts 22 des Zwischenelementes an der Bildung einer selbsteinstellenden Abströmdrossel für das im Sinne von Fig. 2 von links nach rechts entlang der Stützfläche 6a strömende Schmiermittel ausgenutzt werden kann. Umgekehrt führt eine vergleichsweise grosse Dehnungssteifheit des Ringkörpers zu einer über-wiegenden Einschnürungs- oder Rückhaltefunk-tion gegenüber dem elastischen Material des Anschlussbereiches 12, so dass sich die Drosselwirkung durch radiale Aufwölbung des Dichtungsmaterials unabhängig von der mehr oder weniger komplizierten Gestaltung des Axialschnittprofils und der Vulkanisationsfläche am Kolben-Arbeitsglied einstellen lässt.

Die radiale Vorspannwirkung und die Dehnungssteifigkeit des Zwischenelementes lassen sich mit Hilfe von Zusatzfedern den jeweiligen Erfordernissen anpassen. Fig. 2a zeigt eine vergleichsweise schwach wirkende Schrauben-Ringzugfeder 26 im Axialschnitt eines ringförmigen Zwischenelementes 20a mit trapezförmigem Profil. Die Zusatzfeder 26 ist hier in einer äusseren Umfangsnut des Ringkörpers untergebracht. Fig. 2b zeigt eine abgewandelte Profilausführung eines ringförmigen Zwischenelementes 20b mit geringerer radialer Aufdehnbarkeit infolge massiver Querschnittsgestaltung, ausserdem infolge einer in einer entsprechenden Umfangsnut untergebrachten Massiv-Ringfeder. Eine solche Ausführung kann kaum zu einer Drosselbildung unter radialer Aufweitung herangezogen werden, bewirkt aber eine steife Einschnürung und Rückhaltung des Dichtungsschlauch-Anschlussbereiches gegen Aufwölbung unter dem Arbeitsdruck. Die radial aufdehnbaren Ausführungen nach Fig. 2 und 2a bieten dagegen noch den besonderen Vorteil, dass der Ringkörper über den grössten Durchmesser des Axialanschlags 4b hinweg bei der Montage axial auf den einstückig herstellbaren Kolben aufgepresst werden kann. Anderseits ist auch eine Aufbringung von dem arbeitsraumseitigen, im Durchmesser geringeren Abschnitt des Kolbens her im Zustand vor dem Aufvulkanisieren des Dichtungsschlauch-Anschlussbereiches möglich. Die Zentrierung und Einbettung in die Dichtungsmasse erfolgt dann durch das Aufvulkanisieren. Hierbei ergibt sich nicht ohne weiteres eine Stoffschlussverbindung auch zu dem Kunststoff des Zwischenelementes, sondern nur zur Oberfläche des Kolben-Arbeitsgliedes. Eine genügende radiale Vorspannung führt trotzdem zur Abdichtung gegen die Schmierflüssigkeit aus dem Spaltraum zwischen Dichtungsschlauch und Stützfläche. Anderseits kann auch ein gewisser Eintritt der unter Druck stehenden Schmierflüssigkeit unter den Ringkörper des Zwischenelementes zur Unterstützung des radialen Aufweitens bei der Drosselbildung erwünscht sein.

Bei der Ausführung nach Fig. 3 ist das Zwischenelement 30 büchsenförmig mit einem sich längs der Stützfläche 6a erstreckenden, dünnwandigen und daher dehnungsweichen Mantelteil 32 sowie mit einem dickwandigen und steifen Boden- oder Flanschteil 34 versehen. Letzterer wird mittels einer Druckscheibe und einer (nicht dargestellten) Verschraubung am Kolben-Arbeitsglied 4 befestigt und verleiht dem äusseren Endabschnitt des Mantelteils radiale Steifheit. Der arbeitsraumseitige Kantenabschnitt 32a des Mantelteils 32 weitet sich dagegen unter der Wirkung des Arbeitsdruckes im Raum 8 bzw. des entsprechenden Druckes im weichelastischen Material des Dichtungsschlauch-Anschlussbereiches 12 vergleichsweise stark radial auf, kann also überwiegend oder ausschliesslich eine selbsteinstellende Drossel bilden. Gegebenenfalls kann hierzu mit Vorteil eine bereits im spannungslosen Zustand schwach konische, zum Arbeitsraum hin divergierende Form des Mantelteils 32 vorgesehen werden.

Im übrigen kann der Innenraum des büchsenförmigen Zwischenelementes gegebenenfalls ganz oder teilweise vom Material des Dichtungsschlauches freigehalten werden, sofern eine anderweitige Aufweitung zur Bildung einer Drossel wirksam wird. Hierfür kommt unter Umständen der Druck des aus dem Spaltraum eintretenden Schmiermittels in Betracht, der vom Druck im Arbeitsraum abhängt bzw. mit diesem im Gleichgewicht steht.

Besonders vorteilhaft ist weiterhin die wärmeisolierende Wirkung der Zwischenelemente, insbesondere auch der Ausführung nach Fig. 3 mit ihrem breiten Mantelteil, gegen einen Wärmezufluss vom Zylinder bzw. – im Hinblick auf den Bodenteil – vom Antriebsnocken mit seiner Reibungswärme her. Diese Abschirmung gegen zusätzliche Erwärmung trägt zur Beständigkeit des Schlauchmaterials im Anschlussbereich wesentlich bei.

## Patentansprüche

1. Abdichtung für eine Kolben-Zylinderanordnung mit zwei relativ zueinander bewegbaren Arbeitsgliedern (4, 6) und mit einem Dichtungsschlauch (10), der einen Arbeitsraum (8) begrenzt und mindestens mit einem ersten (4) der beiden Arbeitsglieder formschlüssig oder stoffschlüssig verbunden ist und sich unter dem Druck im Arbeitsraum (8) gegen eine durch das zweite (6) der beiden Arbeitsglieder gebildete Stützfläche (6a) abstützt, wobei im Anschlussbereich (12) des Dichtungsschlauches (10) an das erste Arbeitsglied (4) mindestens ein den Dichtungsschlauch (10) umgreifendes Zwischenelement (20, 30) angeordnet ist, dadurch gekennzeichnet, dass zwischen dem Dichtungsschlauch (10) und der Stützfläche (6a) ein Schmiermittel vorgesehen ist und dass das Zwischenelement (20, 30) mindestens an einer der Stützfläche (6a) zugewandten Aussenfläche aus einem gleitfreundlichen, verschleissfesten Material, insbesondere einem polymeren Kunststoff, besteht.

2. Abdichtung nach Anspruch 1, dadurch gekennzeichnet, dass das Zwischenelement (20, 30) unter elastischer Verformung mit radial einwärts wirkender Druckvorspannung auf dem Anschlussbereich (12) des Dichtungsschlauches (10) angeordnet ist.

3. Abdichtung nach Anspruch 2, dadurch gekennzeichnet, dass das Zwischenelement (20a, 20b) mit mindestens einem radial einwärts wirkenden Federelement (26, 28) versehen ist.

4. Abdichtung nach einem der vorangehenden Ansprüche, dadurch gekennzeichnet, dass das Zwischenelement (20, 30) mindestens einen ringförmigen, sich in Umfangsrichtung längs der Stützfläche (6a) erstreckenden und radial elastisch aufweitbaren Abschnitt aufweist, dessen Innenseite unter einem von dem Druck im Arbeitsraum (8) abhängigen Radialdruck steht.

5. Abdichtung nach einem der vorangehenden Ansprüche, dadurch gekennzeichnet, dass das Zwischenelement (20) als mit seiner Innenseite in das elastische Material des Dichtungsschlauch-Anschlussbereichs (12) eingebetteter Ringkörper ausgebildet ist.

6. Abdichtung nach Anspruch 5, dadurch gekennzeichnet, dass an dem ersten Arbeitsglied (4) ein der Axialkomponente des Druckes im Arbeitsraum (8) entgegenwirkender Axialanschlag (4b) für das ringförmige Zwischenelement (2) vorgesehen ist.

7. Abdichtung nach Anspruch 6, dadurch gekennzeichnet, dass das ringförmige Zwischenelement (20) als zur Überwindung der grössten Radialabmessung des Axialanschlages (4b) bei der Montage im wesentlichen elastisch aufweitbarer Ringkörper ausgebildet ist.

8. Abdichtung nach einem der vorangehenden Ansprüche, insbesondere nach einem der Ansprüche 5 bis 7, dadurch gekennzeichnet, dass das Zwischenelement (20) als Ringkörper mit dreieckartigem Querschnitt ausgebildet ist und dass eine Querschnittseite wenigstens annähernd parallel zur Mantellinienrichtung der Stützfläche (6a) angeordnet ist und eine wenigstens annähernd radial verlaufende Querschnittseite auf der dem Arbeitsraum (8) abgewandten Seite des Zwischenelementes (20) angeordnet ist.

9. Abdichtung nach einem der Ansprüche 1 bis 4, dadurch gekennzeichnet, dass das Zwischenelement (30) büchsenförmig mit einem sich längs der Stützfläche (6a) erstreckenden, vorzugsweise vergleichsweise dünnwandigen, zylindrischen oder schwachkonischen Mantelteil (32) sowie mit einem an dem ersten Arbeitsglied (4) befestigten, vorzugsweise vergleichsweise starkwandigen Bodenteil (34) ausgebildet ist.

10. Abdichtung nach Anspruch 9, dadurch gekennzeichnet, dass der Mantelteil (32) des Zwischenelementes (30) an seiner Innenseite unter einem von dem Druck im Arbeitsraum (8) abhängigen Radialdruck steht und elastisch aufweitbar ausgebildet ist.

11. Abdichtung nach Anspruch 9 oder 10, dadurch gekennzeichnet, dass der Innenraum des büchsenförmigen Zwischenelementes (30) mindestens teilweise durch das elastische Material des Dichtungsschlauch-Anschlussbereiches (12) ausgefüllt ist und vorzugsweise in diesem Bereich unter Druckvorspannung steht.

## Claims

1. Sealing for a piston-cylinder assembly having two working elements (4, 6) which can be moved relative to each other, and a sealing hose (10) which demarcates a working space (8) and is joined to at least the first (4) of the two working elements by a form-fit or self-locking, while being supported by a supporting surface (6a) formed by the second of the two working elements (6) under the pressure in the working space (8), at least one intermediate element (20, 30) encompassing the sealing hose (10) being provided in the connection area (12) of the sealing hose (10) to the first working element (4), whereby a lubricant is provided for between the sealing hose (10) and the supporting surface (6a), and intermediate element (20, 30) consists of a slippromoting, wear-resistant material, in particular a polymer plastic, on at least one of the external surfaces facing the supporting surface (6a).

2. Sealing according to Claim 1, whereby the intermediate element (20, 30) is fitted on the connection area (12) of the sealing hose (10) by elastic deformation with initial stress acting radially inwards.

3. Sealing according to Claim 2, whereby the intermediate element (20a, 20b) is provided with at least one spring element (26, 28) acting radially inwards.

4. Sealing according to one of the foregoing claims, whereby the intermediate element (20, 30) has at least one annular portion extending along the supporting surface (6a) in the direction of the circumference and being elastically expandable radially, its inside surface being under radial pressure subject to the pressure in the working space (8).

5. Sealing according to one of the foregoing claims, whereby the intermediate element (20) is designed as an annular body with its inside surface embedded in the elastic material of the connection area (12) of the sealing hose.

6. Sealing according to Claim 5, whereby an axial stop (4b) is provided on the first operating element (4) for the annular intermediate element (2) to counteract the axial component of the pressure in working space (8).

7. Sealing according to Claim 6, whereby the annular intermediate element (20) is designed as a largely elastically expandable annular body to overcome the maximum radial dimension of the axial stop (4b) during installation.

8. Sealing according to one of the foregoing claims, especially one of Claims 5 to 7, whereby intermediate element (20) is designed as an annular body with triangular type cross section, one side of the cross section being mounted at least approximately parallel to the ruling direction of the supporting surface (6a), while one side of the cross section which is at least approximately radial is mounted on the side of the intermediate element (20) facing away from the working space (8).

9. Sealing according to one of Claims 1 to 4, whereby the intermediate element (30) is designed as a sleeve with a cylindrical or slightly tapered shell (32) which extends along supporting surface (6a) and is preferably relatively thin-walled, and with a base (34) which is attached to the first working element (4) and is preferably relatively thick-walled.

10. Sealing according to Claim 9, whereby the shell (32) of the intermediate element (30) is under radial pressure on its inside surface subject to the pressure in the working space (8), and is designed to be elastically expandable.

11. Sealing according to Claim 9 or 10, whereby the internal space of the sleeve-shaped intermediate element (30) is filled at least to some degree by the elastic material of the connection area (12) of the sealing hose and is preferably under initial stress in this area.

## Revendications

1. Dispositif d'étanchéité pour ensemble piston et cylindre, comportant deux éléments actifs (4) et (6), mobiles l'un par rapport à l'autre, et un flexible d'étanchéité (10) limitant un espace (8), craboté ou relié de manière étanche à la poussière avec au moins le premier (4) des éléments actifs, et reposant contre une surface d'appui formée par le deuxième élément actif (6) et soumise à la pression régnant dans l'espace (8), avec présence, dans la zone de raccordement (12) du flexible d'étanchéité (10) au premier élément actif (4) d'au moins un élément intermédiaire (20, 30) enveloppant le flexible d'étanchéité (10) et caractérisé par la présence, entre le flexible d'étanchéité (10) et la surface d'appui (6a) d'un lubrifiant, ainsi que par le fait que l'élément intermédiaire (20, 30) est constitué, au moins sur l'une de ses surfaces extérieures orientées vers la surface d'appui (6a) d'un matériau facilitant le glissement, et en particulier d'un matériau synthétique polymère.

2. Dispositif d'étanchéité selon revendication 1, caractérisé par le fait que, sous déformation élastique en présence de précontrainte en sens radial et intérieur, l'élément intermédiaire (20, 30) s'applique contre la zone de raccordement (12) du flexible d'étanchéité (10).

3. Dispositif d'étanchéité selon revendication 2, caractérisé par le fait que l'élément intermédiaire (20a, 20b) est pourvu d'au moins un élément à ressort (26, 28) agissant en sens radial.

4. Dispositif d'étanchéité selon l'une des revendications ci-dessus, caractérisé par le fait que l'élément intermédiaire (20, 30) présente une section annulaire s'étendant en direction de la périphérie le long de la surface d'appui, extensible élastiquement en sens radial et soumise, sur son côté intérieur, à une pression radiale dépendant de la pression régnant dans l'espace (8).

5. Dispositif d'étanchéité selon l'une des revendications ci-dessus, caractérisé par le fait que l'élément intermédiaire est conformé comme corps annulaire enchâssé avec son côté intérieur dans le matériau élastique formant la zone de raccordement du flexible d'étanchéité (12).

6. Dispositif d'étanchéité selon la revendication 5, caractérisé par le fait que, sur le premier élément actif (4), a été prévue pour l'élément intermédiaire annulaire (2) une butée axiale s'opposant à l'effet de la composante axiale de la force résultant de la pression régnant dans l'espace (8).

7. Dispositif d'étanchéité selon la revendication 6, caractérisé par le fait que l'élément intermédiaire annulaire (20) est conformé comme corps annulaire extensible de manière essentiellement élastique, lors du montage, en vue de dépasser la plus grande des dimensions radiales de la butée axiale (4b).

8. Dispositif d'étanchéité selon l'une des revendications ci-dessus, en particulier les revendications 5 à 7, caractérisé par le fait que l'élément intermédiaire (20) est conformé comme corps annulaire à section grossièrement triangulaire, l'un des côtés de cette section étant au moins approximativement parallèle à la direction des génératrices de la surface d'appui (6a), et un autre de ces côtés, orienté de manière au moins approximativement radiale, étant disposé sur le côté de l'élément intermédiaire (20) opposé à l'espace (8).

9. Dispositif d'étanchéité selon l'une des revendications 1 à 4, caractérisé par le fait que l'élément intermédiaire (30) est conformé comme une boîte ayant une partie chemise (32) cylindrique ou légèrement conique à paroi de préférence comparativement mince et s'étendant le long de la surface d'appui (6a), et une partie de fond à paroi comparativement épaisse et fixée au premier élément actif (4).

10. Dispositif d'étanchéité selon la revendication 9, caractérisé par le fait que la partie chemise (32) de l'élément intermédiaire (30) est conformée de manière élastiquement extensible et soumise sur son côté intérieur à une pression radiale dépendant de la pression régnant dans la chambre (8).

11. Dispositif d'étanchéité selon la revendication 9 ou 10, caractérisé par le fait que l'espace intérieur de l'élément intermédiaire (30) en forme de boîte est occupé au moins en partie par le matériau élastique de la zone de raccordement du flexible d'étanchéité (12), et soumise de préférence à une précompression dans cette zone.

Fig. 1

26

28

20a

20b

Fig. 2a

Fig. 2b

6        12        22        20

4b

4a

10   8   6a   4

9

Fig. 2

6        12        32a        32        30

6a   8   9

Fig. 3

4   34   36   4a